# EUROPEAN PATENT APPLICATION

(11) **EP 3 360 665 A1**
(43) Date of publication of application: **15.08.2018**
(21) Application number: 18152754.0
(22) Date of filing: 22.01.2018
(51) Int. Cl.: B29C 65/34, B29C 65/48, B29C 65/76, F01D 25/24, B32B 37/06, B32B 37/12, B32B 43/00, G01N 25/18, B29C 65/82, B29L 31/30

(54) **BONDING OF TURBOMACHINERY COMPONENTS**

(30) Priority: 08.02.2017 GB 201702057
(71) Applicant: Rolls-Royce plc, London SW1E 6AT (GB)
(72) Inventor: Backhouse, Robert C, Derby, Derbyshire DE24 8BJ (GB)
(74) Representative: Rolls-Royce plc

(57) **Abstract**

This disclosure concerns a composite product having first (12) and second (14) components. At least one intermediate binding layer (16) is located between the first (12) and second (14) components, and at least one electrically conductive member (24) is located within the at least one intermediate layer (16). The at least one electrically conductive member (24) is configured to generate thermal energy upon the application of an electrical current to the at least one electrically conductive member (24). The at least one intermediate layer (16) is configured such that at least one characteristic of the at least one intermediate layer (16) is altered where the thermal energy generated by the at least one electrically conductive member (24) is above a pre-determined threshold.

## Description

### BACKGROUND

This disclosure relates to the bonding together of components, and more particularly to the bonding together of different material portions of composite products, e.g. for use in rotating and/or propulsion machinery.

Composite products of the type disclosed herein may comprise carbon fibre material, such as is used to replace/reduce more-conventional metal materials within machines. There is an ever-present desire in the transport industry to reduce the weight of components and assemblies for vehicles. However certain metallic structures are often preferred for their material/thermal properties and so there is a need to bond such metal structures with composite or other plastic materials. There is also a need to join composite to composite and metallic to metallic structures.

It has previously been proposed in the aerospace industry to bond together component material parts of composite products by utilising adhesives, and in particular by utilising adhesives which cure upon heating. Such curing is typically achieved by placing the entire assembly in an oven. Whilst this achieves the desired curing, the requirement to place the entire assembly in an oven is inefficient. Heating the entire structure may be undesirable. Furthermore, the curing process can be time consuming and costly.

US2014/0363637 discloses an intermediate heating layer provided between a protective polymer film and an underlying polymer/metal substructure. The heating layer comprises material that is susceptible to heating when an alternating magnetic field is applied and a thermoplastic or thermosetting polymer and may be used in conjunction with an adhesive layer. Application of a magnetic field is used to generate heat and can be used for both installation and removal, i.e. debonding. The disclosed construction is proposed for use with a lightning-strike protection film layer for aircraft and is not optimal for a variety of other material bonding scenarios. Inductive heating is impractical or impossible for certain composite structures, e.g. having conductive parts.

It is an aim to provide apparatus and methods which overcome or substantially mitigate the aforementioned and/or other disadvantages associated with the prior art.

### SUMMARY

According to a first aspect there is provided a composite product comprising first and second components, at least one intermediate binding layer located between the first and second components, and at least one electrically conductive member located within the at least one intermediate layer, wherein the electrically conductive member is configured to generate thermal energy upon the application of an electrical current thereto, and the intermediate layer is configured such that at least one characteristic of the intermediate layer is altered where the thermal energy generated by the conductive member is at or above a pre-determined threshold.

The intermediate layer may comprise a composite material, e.g. comprising a matrix or binding material and a reinforcing material therein. The reinforcing material may be arranged as a reinforcing structure, member or plurality of members, e.g. held within the matrix material. The reinforcing structure/member may comprise or consist of the at least one conductive member. The reinforcing material/structure may comprise a plurality of conductive members, e.g. elongate members running through the intermediate layer. The conductive members may comprise fibres, strands, films or the like.

The reinforcing material of a composite may thus be used as a heater located at the intermediate layer between first and second components so as to provide additional functionality at the interface/join between the components.

The at least one electrically conductive member may be at least partially embedded or encapsulated within the intermediate layer, and may, for example, be substantially entirely embedded or encapsulated within the at least one intermediate layer. The electrically conductive member(s) may be suspended in the interface layer.

The electrically conductive member may extend across the intermediate layer, and may, for example, extend across substantially the entirety of the at least one intermediate layer. The thermal energy generated by the electrically conductive member may be substantially evenly dispersed throughout the at least one intermediate layer.

The electrically conductive member may comprise a fibrous electrically conductive material, e.g. arranged as a scrim, tissue, film, or gauze-like structure. In other examples, the electrically conductive material may comprise a textile or webbing.

The at least one electrically conductive member may comprise carbon fibre.

The electrically conductive layer may be substantially electrically isolated on one or both planar surfaces, e.g. by a substantially non-conductive scrim, tissue, film or gauze-like structure to prevent unintended electrical conduction to other intermediate layers or components.

The at least one characteristic of the intermediate layer may comprise the chemical structure of the at least one intermediate layer. The at least one characteristic may comprise the length of, and/or the number of cross-links between, polymer chains of the at least one intermediate layer

The viscosity of the at least one intermediate layer may, e.g. initially, decrease in response to thermal energy generated by the at least one electrically conductive member, for example resulting in flow and wetting of the at least one electrically conductive member, intermediate layers and/or first and second components. The number of cross-links between polymer chains of the at least one intermediate layer may increase in response to thermal energy generated by the at least one electrically conductive member. The increase in number of cross-links may be affected by the material properties of the at least one intermediate layer, for example time and/or temperature dependent properties of the at least one intermediate layer.

The intermediate layer may be configured to be cured (for example to form a bond) by the heat generated by the conductive member, e.g. where the thermal energy generated by the conductive member is at or above a pre-determined threshold. The pre-determined threshold may comprise a curing temperature of the at least one intermediate layer.

The intermediate layer may form a bond between the first and second components where the thermal energy generated by the at least one electrically conductive member is above a pre-determined threshold.

The intermediate layer may be configured to lose its structural integrity, for example break down or degrade, where the thermal energy generated by the electrically conductive member is at or above the pre-determined threshold. The intermediate layer may be configured to lose its structural integrity, for example break down or degrade, where the thermal energy generated by the electrically conductive member is at or above a second pre-determined threshold, which may be higher or lower than the first pre-determined threshold. The number of cross-links between polymer chains of the at least one intermediate layer may decrease in response to thermal energy generated by the at least one intermediate layer. Cross-links between polymer chains of the at least one intermediate layer may be broken or degraded in response to thermal energy generated by the at least one intermediate layer.

The pre-determined threshold may comprise a degradation temperature of the intermediate layer, for example a temperature above which thermal degradation of the at least one intermediate layer occurs. The degradation temperature/threshold of the intermediate layer may be greater than the cure temperature of the at least one intermediate layer. The degradation temperature/threshold may comprise the glass transition temperature of the at least one intermediate layer.

The at least one intermediate layer may break a bond between the first and second components where the thermal energy generated by the conductive member is at or above a pre-determined threshold/temperature.

The at least one characteristic of the intermediate layer may comprise a dimension of the at least one intermediate layer. The at least one characteristic may comprise any or any combination of the length and/or width and/or depth of the intermediate layer.

The intermediate layer may expand and/or contract, for example in at least one dimension, where the thermal energy generated by the electrically conductive member is above a pre-determined threshold. The intermediate layer may expand and/or contract where the temperature of the electrically conductive member is above a pre-determined temperature.

The intermediate layer may comprise a thermal co-efficient of expansion which allows for expansion of the intermediate layer thermal energy is generated by the intermediate layer, for example where the thermal energy generated by the intermediate layer is above a pre-determined threshold/temperature. The at least one intermediate layer may comprise a material with a co-efficient of thermal expansion of at least a 20E-6/K.

The pre-determined threshold may comprise a pre-determined temperature, which may be at least 100°C, at least 125°C, at least 150°C, at least 175°C, or at least 200°C.

A plurality of different thresholds may exist for different uses of the electrically conductive member.

The, or each, pre-determined threshold may be dependent on the at least one characteristic of the at least one intermediate layer that is desired to be altered. At least one characteristic of the at least one intermediate layer may be substantially unaltered where the thermal energy generated by the at least one electrically conductive member is below the pre-determined threshold. This may, for example, allow for alternative uses of the thermal energy generated by the electrically conductive member without alteration of one or more further characteristic of intermediate layer.

Thermal energy generated by the electrically conductive member may be used for any, or any combination, of the following, e.g. where the thermal energy generated by the at least one electrically conductive member is below the pre-determined threshold: to provide periodic heat to the intermediate layer, e.g. to control moisture levels in the vicinity of the intermediate layer or composite product; to inspect the at least one intermediate layer or composite product, e.g. using thermography.

The intermediate layer may comprise a polymeric material. The intermediate layer may comprise a resin, for example an epoxy resin. The intermediate layer may comprise an adhesive, for example an adhesive capable of forming a strong bond between the first and second components. The intermediate layer may comprise a thermoplastic. The intermediate layer may comprise any or any combination of an adhesive film, a thermoplastic film, or a reinforced film.

The intermediate layer may be sandwiched between the first and second components, e.g. as a complete and/or continuous/uniform bonding layer. The at least one intermediate layer may be located at an interface between the first and second components.

The at least one intermediate layer may be located directly between the first and second components. For example, a first surface of the at least one intermediate layer may be in direct contact with the first component, e.g. forming a bond or interface therewith. A second, e.g. opposing, surface of the intermediate layer may be in direct contact with the second component, e.g. forming a bond or interface therewith.

The at least one electrically conductive member may comprise or consist of an electrically resistive material. The at least one electrically conductive member may comprise a substantially uniform electrical resistance, for example over its entire length. The at least one electrically conductive member may comprise an electrical resistance based heating element.

The composite product may comprise at least one electrically insulating member, material or layer, which may, for example, be located within or adjacent the at least one intermediate layer. The at least one electrically insulting member, material or layer may be located between the electrically conducting member and the first and/or second component. Electrical current may be substantially prevented from being transferred from the electrically conducting member to the first and/or second component. The insulating material may have beneficial thermal properties, e.g. for reducing heat transfer to the first and/or second component.

The at least one electrically insulating member may be at least partially embedded within the at least one intermediate layer, and may, for example, be substantially entirely embedded within the intermediate layer. The at least one electrically insulating member may extend across the at least one intermediate layer, and may, for example, extend across substantially the entirety of the at least one intermediate layer. The conductive member may be located between or bounded by a plurality of insulating members.

The at least one electrically insulating member, material or layer may comprise any or any combination of glass, polyester, polyethylene terephthalate (PET), or nylon scrim or tissue.

The product may comprise a component or subassembly of rotating machinery, for example a machine which transfers energy between a rotor and a fluid. The product may be a turbomachinery component, such as a gas turbine engine.

The product or first and/or second component thereof may comprise a rotor or stator for rotating machinery such as a blade, vane, drum or casing.

In certain examples, the first component may comprise a rotor casing and/or the second component may comprise a rotor liner. The first and/or second component(s) may comprise at least a portion of a fan blade, for example at least a portion of a leading edge of a fan blade.

A portion of the electrically conductive member may be exposed or accessible for electrical connection thereto. Current may be applied to the electrically conductive member by one or more side, edge or end thereof.

The first and/or second component may comprise or be formed of metallic or plastic/polymer material. The first and/or second component may comprise a composite component.

According to another example, there is provided apparatus comprising the first and second components and intermediate binding layer of the first aspect and a current source for selectively applying electrical current to the at least one electrically conducting member. The current source may comprise a power supply, and may, for example, comprise a variable power supply.

According to a further example there is provided apparatus comprising first and second components, at least one intermediate layer located between the first and second components, and at least one electrically conductive member located within the at least one intermediate layer, wherein the at least one electrically conductive member is configured to generate thermal energy upon the application of an electrical current to the at least one electrically conductive member, and the at least one intermediate layer is configured to cure so as to form a join or interface layer between the first and second components when the thermal energy generated by the at least one electrically conductive member is above a pre-determined threshold.

According to a further example there is provided apparatus comprising first and second components, at least one intermediate layer located between the first and second components, and at least one electrically conductive member located within the at least one intermediate layer, wherein the at least one electrically conductive member is configured to generate thermal energy upon the application of an electrical current thereto, and the intermediate layer is configured to expand and/or contract when the thermal energy generated by the at least one electrically conductive member is above a pre-determined threshold.

According to a further example there is provided composite product inspection apparatus comprising first and second components of the composite product, at least one intermediate binding layer located between the first and second components, and at least one electrically conductive member located within the intermediate layer, the apparatus further comprising a thermal energy sensor, wherein the electrically conductive member is configured to generate thermal energy upon the application of an electrical current to the at least one electrically conductive member such that the composite product can be inspected using the thermal energy sensor.

According to a further example there is provided a method of forming, altering, inspecting or removing a bond between first and second components of a composite product. The first and second components being spaced by at least one intermediate layer located there-between, the intermediate layer comprising at least one electrically conductive member located therein, the method comprising: applying an electrical current across the electrically conductive member such that thermal energy is generated by the electrically conductive member, said thermal energy altering at least one characteristic of the at least one intermediate layer where the thermal energy generated by the at least one electrically conductive member is above a pre-determined threshold.

The thermal energy may at least partially alter the chemical structure of the at least one intermediate layer. The thermal energy may at least partially alter the length of, and/or the number of cross-links between, polymer chains of the at least one intermediate layer. The bond may be formed by the step of curing the intermediate layer by applying an electrical current across the electrically conductive member such that thermal energy is generated by the electrically conductive member, where the thermal energy generated by the at least one electrically conductive member is above a curing pre-determined threshold. The curing pre-determined threshold may be a lower thermal energy than the pre-determined threshold.

It will be recognised that any optional features of the above examples or aspects of the invention may be equally applied to other examples or aspects of the invention, where appropriate. Features described in relation to the product may be applied to the apparatus or method as required.

### BRIEF DESCRIPTION OF THE DRAWINGS

Practicable embodiments of the present disclosure are described in further detail below by way of example only with reference to the accompanying drawings, of which:
Figure 1 shows a schematic view of apparatus according to an example of the present disclosure;
Figure 2 shows an enlarged view of the region A labelled in Figure 1; and,
Figure 3 shows a half longitudinal section through a gas turbine engine.

### DETAILED DESCRIPTION

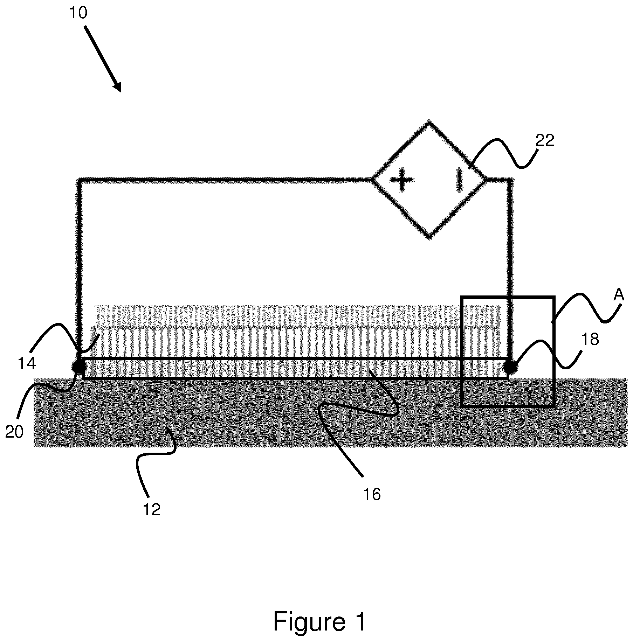

Apparatus, generally designated 10, is shown schematically in Figure 1. The apparatus 10 in this particular example is turbomachinery apparatus, although it will be appreciated that this specific application is described by way of example only and other composite product applications, particularly for machinery, may be envisaged by the skilled person. The apparatus 10 comprises turbomachinery casing 12, a turbomachinery liner 14, an adhesive layer 16, first 18 and second 20 electrical connections, and a variable power supply 22.

The casing 12 may be metallic and may be formed, for example of aluminium, titanium, steel or other suitable metal. Alternatively the casing 12 may be formed from fibre-reinforced composite materials, e.g. including some integral metallic features. Similar material options may be considered for the liner including plastics and/or composite materials, such as carbon reinforced composites. Thus the casing and liner may comprise, similar or dissimilar materials depending on the specific details of their implementation. The turbomachinery casing 12 and the turbomachinery liner 14 are desired to be bound together by the binding layer 16, particularly where at least one component is non-metallic or composite in structure.

The binding layer 16 in this example comprises an adhesive and is thus referred to herein as adhesive layer 16. In particular, the adhesive undergoes a reaction upon curing such that a bond is formed between the adhesive layer and the adjoining components 12, 14. The term 'binding layer' as used herein is thus intended to encompass both mechanical and/or chemical bonding properties of the layer in use.

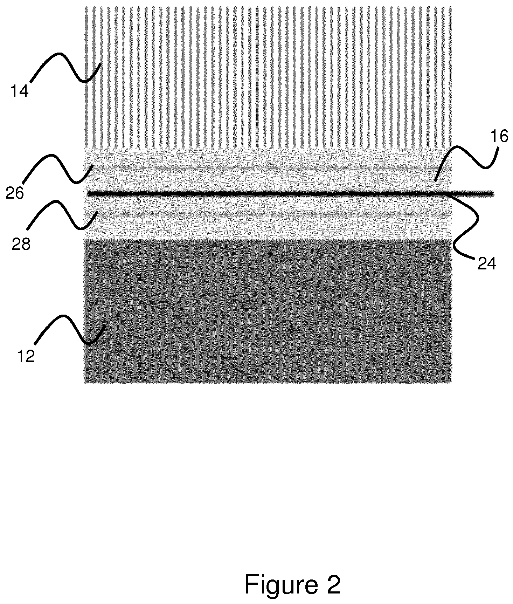

The adhesive layer 16 is shown in more detail in Figure 2. In this embodiment the adhesive layer 16 is adhesive epoxy resin. The resin has a cure temperature of greater than 80 or 100°C, such as approximately 125°C, although it will be recognised that other appropriate curing properties can be used, where appropriate.

The adhesive layer 16 has an embedded electrical resistance heating element 24, and first 26 and second 28 embedded electrically insulating components.

The embedded electrical resistance heating element 24 in this embodiment is carbon fibre scrim or tissue having a substantially uniform resistance along its length. The heating element 24 is thus formed of multiple carbon fibres arranged as a transverse structure running through the entire width/length of the adhesive layer 16. The heating element may thus be provided as a tangled, bundled or meshed network of fibres, which may be arranged in a uniform/regular pattern or a haphazard collection of fibres within the adhesive layer 16. Even in a haphazard collection, the fibres will typically be generally/roughly aligned so as to extend between opposing sides of the adhesive layer.

In a practicable example, the at least one electrically insulating member may comprise DuPont Dacron Polyester scrim.

In some examples, the intermediate layer may comprise any or any combination of an adhesive film, a thermoplastic film, or a reinforced film. The intermediate layer may, for example, comprise any or any combination of PolyPhenyleneSuphide (PPS), Poly EtherEtherKetone (PEEK), PolyEtherKetoneKetone (PEKK), or the materials known commercially as Henkel 9696, 3M 3109-2, or Hexcel Redux 319.

The heating element 24 may be considered to comprise the reinforcing fibre structure of a composite material, such that the reinforcing structure is impregnated with a matrix (e.g. resinous) material. Whilst the reinforcing material is used to complement the material properties of the matrix material in more conventional composite material applications, the reinforcing material/structure may be used according to the examples of the present disclosure for its beneficial electrical conductivity/resistance properties. The reinforcing material/structure may serve as an electric heater for any or any combination of uses disclosed herein.

The embedded electrical resistance heating element 24 is entirely embedded within the adhesive layer 16, save for portions at either end which connect to the first 18 and second 20 electrical connections. This may reduce the thickness or bulk of the apparatus 10, and the adhesive layer 16 may protect the embedded electrical resistance heating element 24 during handling and/or installation.

The first 26 and second 28 embedded electrically insulating components are entirely embedded within the adhesive layer 16. The first 26 and second 28 embedded electrically insulating components in this embodiment are formed of glass, although alternative insulating material may be considered. The first embedded electrically insulating component 26 is located on a first side of the embedded electrical resistance heating element 24, between the embedded electrical resistance heating element 24 and the turbomachinery liner 14, whilst the second embedded electrically insulating component 28 is located on a second side of the embedded electrical resistance heating element 24, between the embedded electrical resistance heating element 24 and the turbomachinery casing 12.

The electrically insulating components 26 and/or 28 may provide beneficial thermal insulation if it is desired to thermally insulate the heating element 24 from either or both of the bonded components (i.e. the casing and liner in this example).

To bond the turbomachinery liner 14 to the turbomachinery casing 12, the variable power supply 22 is used to apply electrical power across the embedded electrical resistance heating element 24. The electrical resistance of the embedded electrical resistance heating element 24 causes the embedded electrical resistance heating element 24 to generate heat, which is transferred to the adhesive layer 16. The power supplied by the variable power supply 22 is chosen such that the embedded electrical resistance heating element 24 generates heat having a temperature which is above the cure temperature, e.g. above 125°C in this example, of the adhesive layer 16. This causes the adhesive layer 16 to cure, thereby bonding the turbomachinery liner 14 to the turbomachinery casing 12. Once cured the rigid adhesive layer thus rigidly holds the relative alignment of the liner 14 and casing 12.

The apparatus 10 may thereby bond the turbomachinery liner 14 to the turbomachinery casing 12, e.g. with a reduced power input compared to prior art methods which require heating of the apparatus 10 as a whole. This may also reduce cost and timescale, as only the local bondline is required to be heated. Furthermore, this may reduce residual thermal stresses in the apparatus 10, as the turbomachinery casing 12 and turbomachinery liner 14 are only surface heated, rather than volumetrically heated. This method of heating may also be suitable for conductive parts where induction heating would not typically be possible.

Once the bond between the turbomachinery casing 12 and the turbomachinery liner 14 has been formed, the variable power supply 22 can supply power to the embedded electrical resistance heating element 24 such that heat is generated by the embedded electrical resistance heating element 24 at a temperature lower than the glass transition temperate of the adhesive layer 16.

The generated heat can then be used for many purposes, including, but not limited to:
- to maintain acceptable moisture conditions in the adhesive that forms the bondline and extending into the joined components adjacent to the bondline
- to de-ice, or prevent ice formation, on components of the apparatus 10
- to actively control the physical/elastic or strength properties of the bondline and extending into the joined components adjacent to the bondline as part of an adaptive damping/vibration control system
- to inspect the bondline and extending into the joined components adjacent to the bondline, for example as part of thermography, or Non Destructive Inspection/Test (NDI/NDT) processes.

The variable power supply 22 can also supply power to the embedded electrical resistance heating element 24 such that heat is generated by the embedded electrical resistance heating element 24 at a temperature higher than the glass transition temperate of the adhesive layer 16. This may cause the bond formed by the adhesive layer 16 to degrade and/or break. This may aid disassembly or repair of the apparatus 10, replacement of component parts of the apparatus 10, or end-of-life separation of components of the apparatus 10.

In another example, the adhesive layer 16 may consist of a material having a pre-determined co-efficient of thermal expansion. The variable power supply 22 can supply power to the embedded electrical resistance heating element 24 such that heat is generated by the embedded electrical resistance heating element 24 at a temperature lower than the glass transition temperate of the adhesive layer 16, and such that the adhesive layer expands 16 and/or contracts, as appropriate.

This behaviour may be controlled so as to provide active control of the bondline thickness (for example to control clearance between a case and rotating turbomachinery in controlled response to changing boundary conditions). It may be desirable to maintain a minimum clearance between the case/liner and the tip of a rotating blade such as a compressor blade. Conventional tip clearance detection equipment may be used to determine the clearance from the casing and current may be supplied to the heating element to cause expansion of the adhesive layer 16 and thereby reduce the clearance or else current supply to the heating element may be reduced for the converse effect.

Heating at the bondline may be used additionally or alternatively to reduce moisture buildup - i.e. by warming the adhesive layer and optionally the adjoining portion of either or both of the component on opposing sides of the adhesive layer.

In freezing ambient conditions, the heating element 24 can be used to prevent unwanted ice accretion at or near the adhesive layer. Depending on the level of heating, the heating element may be used to substantially inhibit ice formation at the surface of the adhesive layer or adjoining component, or else to ensure that any ice that forms on the relevant surface only weakly attaches to the surface such that it breaks away from the surface upon buildup of any significant volume/mass on the surface.

Constant or selective heating may be used according to sensed icing conditions, e.g. comprising ambient humidity and/or temperature.

The possibility to adjust the adhesive layer by heating may be used to alter the mechanical properties of the bonded composite structure, such as its vibration response characteristics. Selective heating of the adhesive layer can thus alter/soften the adhesive layer slightly so as to dampen vibrations passing therethrough. Particularly for rotating machinery this may be beneficial in avoiding excessive vibration resulting from operation of the rotor, e.g. causing vibration at or close to a natural frequency or harmonic of the bonded composite structure. Sensors may be used to determine when a potentially detrimental frequency of vibration is applied and current may be applied to the heating element 24 so as to dampen the vibrations or else shift the vibration response of the composite structure to avoid vibration amplitude increase.

In addition to, or instead of vibration sensors, the control of the heating element 24 could be enacted according to the rotational/engine speed, e.g. for predetermined ranges of rotor/engine speed.

It is noted that, in addition to, or instead of the material property change caused by heating the adhesive layer, any change in the thermal expansion of the adhesive layer could be used to affect the vibration response of the bonded composite structure.

According to other optional uses, the heating element in the adhesive layer may be used to facilitate thermal inspection of the bond/interface. That is to say by applying heat through the adhesive layer using the embedded heating element, the manner in which heat is dissipated through the structure can be recorded using heat sensors - i.e. non-contact heat sensors such as thermal imaging sensors. Using a static or transient temperature map/image for the component, it can be determined whether uneven or unexpected temperature gradients are present which are indicative of any defects at or adjacent the adhesive layer. Accordingly, internal or surface defects that could lead to operational risks, such as failure of the adhesive layer in use can be identified by thermal inspection.

Various uses of a conductive heating element at a bonding interface between adjacent components of a composite product have been disclosed. Contrary to conventional thinking that would discourage the insertion of member that could potentially weaken the strength of the bond between two adjacent components, it has been found that, based on the use of a composite reinforcing structure as a potential conducting element, a number of uses for the heating element can be devised without undue degradation of the in-use binding strength.

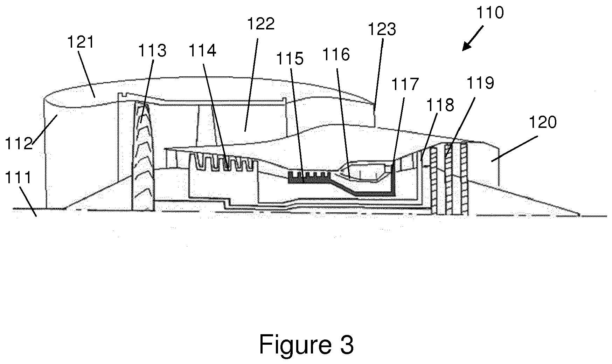

With reference to Figure 3, a ducted fan gas turbine engine generally indicated at 110 has a principal and rotational axis 111. The engine 110 comprises, in axial flow series, an air intake 112, a propulsive fan 113, an intermediate pressure compressor 114, a high-pressure compressor 115, combustion equipment 116, a high-pressure turbine 117, and intermediate pressure turbine 118, a low-pressure turbine 119 and a core engine exhaust nozzle 120. A nacelle 121 generally surrounds the engine 110 and defines the intake 112, a bypass duct 122 and a bypass exhaust nozzle 123.

The gas turbine engine 110 works in a conventional manner so that air entering the intake 112 is accelerated by the fan 113 to produce two air flows: a first air flow into the intermediate pressure compressor 114 and a second air flow which passes through a bypass duct 122 to provide propulsive thrust. The intermediate pressure compressor 114 compresses the air flow directed into it before delivering that air to the high pressure compressor 115 where further compression takes place.

The compressed air exhausted from the high-pressure compressor 115 is directed into the combustion equipment 116 where it is mixed with fuel and the mixture combusted. The resultant hot combustion products then expand through, and thereby drive the high, intermediate and low-pressure turbines 117, 118, 119 before being exhausted through the nozzle 120 to provide additional propulsive thrust. The high, intermediate and low-pressure turbines 117, 118, 119 respectively drive the high and intermediate pressure compressors 115, 114 and the fan 113 by suitable interconnecting shafts.

Alternative gas turbine engine arrangements may comprise a two, as opposed to three, shaft arrangement and/or may provide for different bypass ratios. Other configurations known to the skilled person include geared turbofan engines, open rotor designs, such as turboprop engines, or else turbojets, in which the bypass duct is removed such that all air flow passes through the core engine. In certain configurations, the torque from one or more engine shaft may be used to generate electrical power instead of, or in addition to, driving airflow. The various available gas turbine engine configurations are typically adapted to suit an intended operation which may include aerospace, marine, power generation amongst other propulsion or industrial pumping applications.

The component binding apparatus, methods and uses disclosed herein may be applied to components of the gas turbine engines for which it is desirable to use non-metallic and/or composite material. Such examples may comprise any or any combination of rotor/stator components for the low, medium or high pressure compressors 113, 114 and 115 and/or associated portions of the lining, casing, nacelle and/or support structure.

## Claims

1. A method of altering a bond between first (12) and second (14) components of a composite product, the first (12) and second (14) components being bonded by at least one intermediate layer (16) between the first (12) and second (14) components, the at least one intermediate layer (16) comprising at least one electrically conductive member (24) located therein, the method comprising:
applying an electrical current across the at least one electrically conductive member (24) such that thermal energy is generated by the at least one electrically conductive member (24), said thermal energy altering at least one bonding characteristic of the at least one intermediate layer (16) (for example to lose its structural integrity) where the thermal energy generated by the at least one electrically conductive member (24) is above a pre-determined threshold.

2. The method according to claim 1, wherein the bond is formed by the step of curing the intermediate layer by applying an electrical current across the electrically conductive member such that thermal energy is generated by the electrically conductive member, where the thermal energy generated by the at least one electrically conductive member is above a curing pre-determined threshold.

3. The method according to claim 2, wherein the curing pre-determined threshold is a lower thermal energy than the pre-determined threshold.

4. A composite product comprising first (12) and second (14) components, at least one intermediate binding layer (16) located between the first (12) and second (14) components, and at least one electrically conductive member (24) located within the intermediate layer (16),
wherein the electrically conductive member (24) is configured to generate thermal energy upon the application of an electrical current thereto, and the intermediate layer (16) is configured such that at least one characteristic of the intermediate layer (16) is altered where the thermal energy generated by the electrically conductive member (24) is at or above a pre-determined threshold.

5. The composite product of claim 4, wherein the at least one intermediate layer (16) is configured to lose its structural integrity where the thermal energy generated by the at least one electrically conductive member (24) is above the pre-determined threshold so as to break a bond between the first (12) and second (14) components for separation thereof.

6. The composite product of any one of claims 4 or 5, wherein the at least one characteristic of the intermediate layer (16) comprises at least one dimension of the at least one intermediate layer (16) such that the intermediate layer (16) is arranged to undergo thermal expansion in response to the electric current supplied to the electrically conductive member (24).

7. The composite product of any one of claims 4 to 6, wherein the intermediate layer (16) comprises a binding material and the electrically conductive member (24) comprises electrically conductive material (24) embedded within the binding material.

8. The composite product of any one of claims 4 to 7, wherein the intermediate layer (16) comprises a composite material having a reinforcing material structure embedded within a binding material matrix, the reinforcing material structure comprising or consisting of the conductive member (24).

9. The composite product of any one of claims 4 to 8, wherein the pre-determined threshold comprises a curing temperature of a material of the intermediate layer (16) and the thermal energy generated by the conductive member (24) is arranged to form a bond between the first (12) and second (14) components by curing said material.

10. The composite product of any one of claims 4 to 9, comprising at least one electrically insulating member (26;28) located within or adjacent the intermediate layer (16), between the electrically conducting member (24) and the first (12) and/or second (14) component.

11. The composite product of any one of claims 4 to 10, comprising a subassembly of a rotor (113, 114, 115) or stator of rotating machinery (110) (for example a gas turbine engine).

12. Apparatus (10) comprising first (12) and second (14) components, at least one intermediate binding layer (16) located between the first (12) and second (14) components, at least one electrically conductive member (24) located within the at least one intermediate layer (16), and a power source for the supply of electrical current to the electrically conductive member (24), wherein the at least one electrically conductive member (24) is configured to generate thermal energy upon the application of an electrical current to the at least one electrically conductive member (24), and the at least one intermediate layer (16) is configured to cure (for example to create a bond between first (12) and second (14) components) where the thermal energy generated by the at least one electrically conductive member (24) is above a pre-determined threshold.

13. The apparatus according to claim 12, wherein where the thermal energy generated by the at least one electrically conductive member (24) is above a second pre-determined threshold the bond between first (12) and second (14) components loses its structural integrity.

14. The use of the composite product according to any one of Claims 4 to 11 or the apparatus (10) of Claim 12 or 13 to alter a characteristic of the intermediate layer (16) between the first (12) and second (14) components, wherein the use comprises any or any combination of vibration control, heating for moisture/ice mitigation and/or thermal expansion of the intermediate layer.

15. The use of the composite product according to any one of Claims 4 to 11 or the apparatus (10) of Claim 12 or 13 to alter a characteristic of the intermediate layer (16) between the first (12) and second (14) components, wherein the use comprises product inspection.
